# EUROPEAN PATENT APPLICATION

(11) **EP 3 798 957 A1**
(43) Date of publication of application: **31.03.2021**
(21) Application number: 19461584.5
(22) Date of filing: 24.09.2019
(51) Int. Cl.: G06Q 20/02, G06Q 20/22, G06Q 20/32, G06Q 20/40

(54) **A METHOD AND A SYSTEM FOR EXECUTING A TRANSACTION**

(71) Applicant: Diemko, Janusz, 05-080 Izabelin (PL); Malita, Cezary, 03-176 Warszawa (PL); Szymczak, Marcin, 03-294 Warszawa (PL); Sowinski, Tomasz, 03-742 Warszawa (PL)
(72) Inventor: Diemko, Janusz, 05-080 Izabelin (PL); Malita, Cezary, 03-176 Warszawa (PL); Szymczak, Marcin, 03-294 Warszawa (PL); Sowinski, Tomasz, 03-742 Warszawa (PL)
(74) Representative: AOMB Polska Sp. z.o.o.

(57) **Abstract**

Present invention relates to a method for executing a transaction between a first party and a second party in a system comprising:
- an operation server, operatively connected with or including a transaction processor;
- a first party device, operatively connected with the operation server;
- a second party device, operatively connected with the operation server;
- said method comprising the following steps:
A. Providing a unique transaction identifier (UTID) associated with the transaction;
B. Transmitting a first payload information from the first party device to the second party device, said first payload information comprising data relating to the transition associated with the unique transaction identifier (UTID);
C. Notifying the operation server about the transaction;
D. Generating a second payload information by the second party device and sending the second payload information from the second party device to the operation server, said second payload information comprising data relating to the transaction associated with the unique transaction identifier (UTID);
E. Authorizing the transaction in the transaction processor by the operation server based on the second payload information and receiving a result of the authorization by the operation server.

The invention also provides a system configured and programmed for carrying out said method.

## Description

### Background

The invention relates to a method and a system for executing a transaction between a first party and a second party. The invention includes, but is not limited to, a remote payment method and system for implementing thereof, said system comprising a payment apparatus, in particular a mobile device.

Document US10127532 discloses a technology for customizing the flow of a payment transaction at a payer's mobile device, based on parameters associated with a payee to which the payer is making the payment. The payee can be an individual person or a specific business entity (e.g., restaurant, political cause, professional service, etc.). The transaction flow technology involves communication between a mobile application installed on the mobile device and a remote payment service system (PSS). A list of potential payees can be displayed for selection by the payer at the mobile application. The payees can be nearby payees identified by using, e.g., BLE, Bluetooth®, Wi-Fi®, geofence, etc. Upon selection of a particular payee by the payer, the PSS identifies one or more parameters of that payee, e.g., payee type, and generates a transaction flow to guide the payer through a payment transaction with the selected payee based on those parameters.

Document US2018349956 discloses a method includes, receiving one or more merchant profiles, wherein each merchant profile includes data related to a related merchant including at least a respective merchant identifier, a respective merchant geolocation, and one or more payment methods accepted by the respective merchant as a form of payment; determining a geolocation associated with a mobile device of a consumer; identifying a first merchant profile, of the one or more merchant profiles, associated with a first merchant, wherein the geolocation associated with the mobile device of the consumer corresponds to the merchant geolocation included in the identified first merchant profile; transmitting an indication of the one or more payment methods accepted by the first merchant as a form of payment; and causing the mobile device of the consumerto output information associated with the one or more payment methods accepted by the first merchant.

Document WO2015006570 discloses a mobile payment using proximity-based peer-to-peer (P2P) communication and an intent-to-pay gesture. In particular, a mobile device may detect a distinctive intent-to-pay gesture from one or more signals generated with one or more sensors on the mobile device. For example, the signals may indicate that the mobile device was gestured against a passive target that may resonate to indicate that the intent-to-pay gesture was made. The mobile device may then receive transaction details over a proximal P2P connection in response to detecting the intent-to-pay gesture and send a message over the proximal P2P connection to complete the mobile payment in response to receiving an input confirming the transaction details. Furthermore, the passive target may be constructed to produce a distinct resonant response that can be used to identify the passive target (e.g., using a microphone on the mobile device).

All aforementioned documents disclose payment transaction in which a customer provides and sends its personal information and payment information to the merchant. The merchant prepares transaction information using customer personal information (e.g. name, ID, account number, credit card number), then sends away transaction information to specific authority (e.g. bank, payment server) for authorization. Authorized (or not) transaction is then send back to the merchant who can close transaction (or not). The merchant is possession of all personal and some financial data of a customer. The customer has no control and no information where his personal data have been sent, where they are store and who can use it.

### Summary of the invention

The present invention provides a method for executing a transaction between a first party and a second party in a system comprising:
- an operation server, operatively connected with or including a transaction processor;
- a first party device, operatively connected with the operation server;
- a second party device, operatively connected with the operation server;
- said method comprising the following steps:
   A. Providing a unique transaction identifier (UTID) associated with the transaction;
   B. Transmitting a first payload information from the first party device to the second party device, said first payload information comprising data relating to the transition associated with the unique transaction identifier (UTID);
   C. Notifying the operation server about the transaction;
   D. Generating a second payload information by the second party device and sending the second payload information from the second party device to the operation server, said second payload information comprising data relating to the transaction associated with the unique transaction identifier (UTID);
   E. Authorizing the transaction in the transaction processor by the operation server based on the second payload information and receiving a result of the authorization by the operation server.

Preferably the first payload information comprises at least the unique transaction identifier (UTID) and optionally further comprises additional information such as: amount and currency of the transaction, table identifier, cashbox identifier, outlet identifier, receipt identifier, information about the first party, in particular the first party identifier, name, logo, terminal identifier, picture of good related to transaction, transaction description, geolocation data, sound.

Preferably the second payload information comprises at least the second party identifier and optionally further comprises additional information such as: the unique transaction identifier (UTID), consent of the second party to the transaction, amount and currency of the transaction, table identifier, cashbox identifier, receipt identifier, information about the second party, in particular the second party name, credit card identifier, logo, terminal identifier.

Preferably in the step a) the unique transaction identifier (UTID) is generated by the first party device.

Preferably in the step a) the unique transaction identifier (UTID) is generated by the operation server on request from the first party device and is subsequently transmitted from the operation server to the first party device.

Preferably the first payload information in the step b) is transmitted directly from the first party device to the second party device, preferably using a wireless radio communication protocol such as: Bluetooth, Wi-Fi, BLE (Bluetooth Low Energy), ultrasound.

Alternatively, preferably the first payload information in the step b) is transmitted between the first party device and the second party device through another communication node, in particular through the operation server.

Preferably in order to establish a connection between the first party device and the second party device prior to the step b) any of the following steps are performed:
the first payload information is broadcasted by the first party device and is received by the second party device located in the vicinity of the first party device;
the information about the presence of the first party device is broadcasted by the first party device and is received by the second party device located in the vicinity of the first party device, which second party device - in turns - sends to the first party device a request for the first payload information;
the information about the presence of the second party device is broadcasted by the second party device and is received by the operation server or by the first party device located in the vicinity of the second party device;
and a connection between the first party device and the second party device is established;

Preferably the step b) is carried out between the first party device and the second party device selected using additional criteria such as: first party type, second party type, physical location of the first party device or of the second party device;

Preferably the notification in the step c) is executed by the first party device.

Preferably after the step e) it comprises additional step:
f) sending information about the result of the authorization for the transaction associated unique transaction identifier (UTID) by the operation server to the first party device and/or to the second party device.

Preferably the operation server and the transaction processor are implemented on the same device or the operation server includer the transaction processor.

Preferably the first party device and/or the second party device is a wireless telecommunication device, preferably a smartphone.

Preferably said transaction is a financial transaction, said first party and said second party are parties to the financial transaction, wherein the first party is a merchant, the second party is a customer, the first party device is the merchant device, the second party device is the customer device.

Preferably transaction processor includes a payment scheme, for example a bank card system, a bank transfer system, BLIK, Paypal, PSD2 (Payment Services Directive 2), a blockchain-based system, DLT (Distributed Ledger Technology).

The invention also provides a system comprising:
- an operation server, operatively connected with or including a transaction processor.
- a first party device, operatively connected with the operation server.
- a second party device, operatively connected with the operation server.
said system configured and programmed for carrying out the above mentioned method.

Preferably the first party device and/or the second party device is a wireless telecommunication device, preferably a smartphone.

Preferably it comprises two or more first party devices and/or two or more second party devices.

### Brief description of drawings

Fig. 1 schematically shows a 1^{st} transaction flow according to the invention - in which the first payload information is passed directly.
Fig. 2 schematically shows a 2^{nd} transaction flow according to the invention - in which the first payload information is passed through nearby provider service.
Fig. 3 schematically shows a 3^{rd} transaction flow according to the invention -which includes nearby discovery and in which the first payload information is exchanged directly.
Fig. 4 schematically shows a 4^{th} transaction flow according to the invention - in which the payer downloads possible transaction form the operation server based on merchant nearby presence.
Fig. 5 a and b schematically shows a 5^{th} extended transaction flow according to the invention - in which the first party (merchant) creates invitations to transactions instead of transaction definitions.
Fig. 6 schematically shows a 6^{th} transaction flow according to the invention - a P2P flow.
Fig. 7 schematically shows a 7^{th} transaction flow according to the invention - Check - In - Check -Out.
Fig. 8 schematically shows a 8^{th} transaction flow according to the invention - in which external hardware is used.

### Detailed description

### Definitions:

**Operation server** - a system backend responsible for all business logic in the system.
**Nearby provider** - a system component responsible for exchanging payloads between nearby parties (for example between first and second party). Nearby provider can be a separate service or can be part of operation server. This is an optional component - in some implementations whole communication that is done through nearby provider can be realized with the use of first and second party device hardware technologies.
**First party** - a party which creates a first payload information (for example a merchant or a P2P sender).
**Second party** - a party/parties which receive(s) the first payload information and create(s) a second payload information.
**First party application** - a software application used by the first party to fulfill transaction flow rules. It can be a mobile application installed on the first party device or any other application installed on any first party device (like POS device, computer, tablet etc.) that can make required actions.
**Second party application** - a software application used by the first party to fulfill transaction flow rules. It can be a mobile application installed on the first party device or any other application installed on any first party device (like POS device, computer, tablet etc.) that can make required actions.
**First party device** - a physical device (for example, a mobile phone, tablet, POS device, computer, etc) used by the first party in transaction flow.
**Second party device** - a physical device, physical device (for example, a mobile phone, tablet, POS device, computer, etc.) used by first party in transaction flow.
**Nearby receivers** - parties that are searching for messages (first payload information) emitted by other nearby parties.
**Transactions:** The transaction between the first and the second party may be (but does not have to be) a financial transaction. In case of a financial transaction - the first and second payload information are first and second payment information, respectively. Non-financial transactions include e.g. exchange of goods, exchange of electronic goods, transactions relating to loyalty points etc.
**Nearby proximity technologies** mean any communication technologies suitable for direct exchange of data between the first party device and the second party device. They include, but are not limited to: Bluetooth, Bluetooth Low Energy (BLE), ultrasound, infrared, scanning screen of one device with a camera of another device, proximity communication technologies, geolocation, geofencing.

The transaction flows presented below can be divided by:
- **Transaction types:**
   a) Simple transaction flow - first payload information (for example bill) created by merchant.
   b) Predefined products flow - a bill created by customer based on predefined products.
   c) Invitation to transaction - the first party broadcasts invitations to transaction. When the second party accepts it - direct connection is made. Transaction details can be then provided and updated to the second party in real-time.
   d) P2P - when two parties want to pass goods or money to each other.
   e) Check-in, Check out - when transaction amount is determined by check in / check out actions - and amount of time that elapses between them.
- **Transaction results:**
   a) Confirmation of bill paid.
   b) Action taken - for example: a vending machine product is received, a barrier is opened.
   c) Electronic goods exchanged: for example, ticket sent by email, voucher code, e-book.
   d) P2P transfer made - receiver received goods: money, electronic goods, loyalty points etc.
- **Ways of transaction finalization** - **how transaction is finalized:**
   a) Money transfer: PSD2, Google/Apple pay, Masterpass, Visa/MC etc.
   b) Electronic goods exchange - for example transaction finalized with the use of loyalty points, gift cards etc.

### Example transaction flow

In the description below, whenever information is sent to nearby located parties or party's presence is advertised to nearby parties - it is understood that it can be done with the use of a separate service (nearby service) or internally by the party's device itself - with the use of nearby proximity technologies like Bluetooth, BLE, ultrasound, proximity technologies, geolocation, geofencing etc.

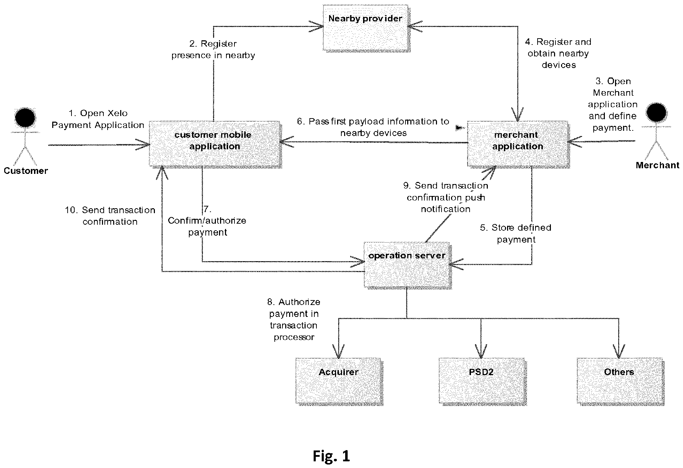

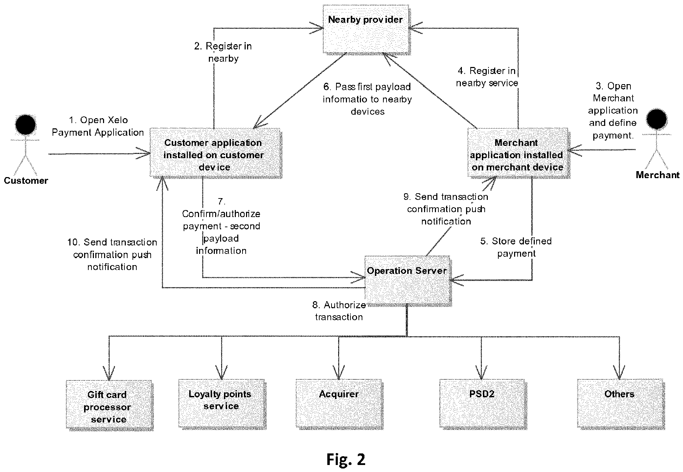

### 1^{st} transaction flow (Figs. 1 and 2)

Transaction flows for a first transaction type, which are simple transaction flows, are presented in Fig. 1 and 2. In these flows, a first party (for example a merchant) defines a transaction (for example a bill) that needs to be finalized (for example paid). A first payload information can be passed directly between the parties (Fig. 1) or it can be passed through another communication node - i.e. a separate nearby service (Fig. 2).

Fig. 1 and Fig2. illustrate processes, where the first party is represented by the merchant with merchant application installed on a mobile device, preferably a smartphone or a tablet. The second party is represented by a customer (payer). Fig. 1 and Fig. 2 show payment process where the customer wants to obtain some goods and pay for them. In the flow shown in Fig. 1, the first payload information is distributed directly without external services to parties determined as located nearby, wherein in the flow shown in Fig. 2 external service is used to pass that information to nearby parties.

The flow without using external service, where the first payload information is transferred directly between the parties determined as located nearby, shown in Fig. 1, comprises following steps:
(1) The customer starts his application.
(2) The customer registers his presence by the nearby provider. The customer can start his application at any moment of the process (for example after the bill has been already created). The registration is optional.
(3) The merchant starts his application installed on his device.
(4) The merchant registers its presence by the nearby provider. The merchant defines a transaction on his mobile device. The unique transaction identifier (UTID) is created. The registration is optional.
(5) The transaction is preferably registered in an operation server and/or is stored locally. Transaction payload is transmitted directly to customers who have their mobile application started and who are located close to the merchant.
(6) The customers receive encrypted transaction payloads from merchants who are located near to them.
(7) One of the Customers confirms his willingness to finalize the transaction on his mobile device in the mobile application, which triggers payment request to the operation server.
(8) Payment-transaction finalization can be made in different ways as described in the ***Ways of transaction finalization*** section above.
(9) The operation server processes the transaction and is preferably connected to appropriate external payment system to fulfill payment. The transaction may be any type of a financial transaction as well as any other way to provide agreed exchange of goods, like loyalty points, exchange for goods or payment with the use of gift card etc. In case of a financial transaction - the first and second payload information are first and second payment information, respectively.
(10) The operation server informs the parties about the transaction result, preferably the operation server makes additional actions determined for specific transaction type (as described in the **Transaction results** section above). The notification is optional.

### 2^{nd} transaction flow (Fig. 2)

A transaction flow for a first transaction type, which is a Simple transaction flow, is presented in Fig. 2. The second transaction described below corresponds to the first transaction flow mention above with the difference that an external service (nearby provider) is used to pass information to nearby parties. In this flow, a first party (for example a merchant) defines a transaction (for example a bill) that needs to be finalized (for example paid). In this flow the first payload information passes through another communication node - i.e. a separate nearby service (Fig. 2). The flow shown in Fig. 2 comprises following steps:
(1) The customer starts his application.
(2) The customer register his presence by the nearby provider. The customer can start his application at any moment of the process (for example after the bill has been already created). The registration is optional.
(3) The merchant starts his application installed on his device.
(4) The merchant registers its presence by the nearby provider. The merchant defines a transaction on his mobile device. The unique transaction identifier UTID is created. The registration is optional.
(5) The transaction is preferably registered in an operation server and/or is stored locally. Transaction payload is transmitted directly to customers who have their mobile application started and who are located close to the merchant.
(6) The customers receive encrypted transaction payloads from merchants who are located near to them.
(7) One of the customers confirms his willingness to finalize the transaction on his mobile device in the mobile application, which triggers payment request to the operation server.
(8) Payment-transaction finalization can be made in different ways as described in the ***Ways of transaction finalization*** section above.
(9) The operation server processes the transaction and is preferably connected to appropriate external payment system to fulfill payment. The transaction may be any type of a financial transaction as well as any other way to provide agreed exchange of goods, like loyalty points, exchange for goods or payment with the use of gift card etc. In case of a financial transaction - the first and second payload information are first and second payment information, respectively.
(10) The operation server informs the parties about the transaction result, preferably the operation server makes additional actions determined for specific transaction type (as described in the **Transaction results** section above). The notification is optional.

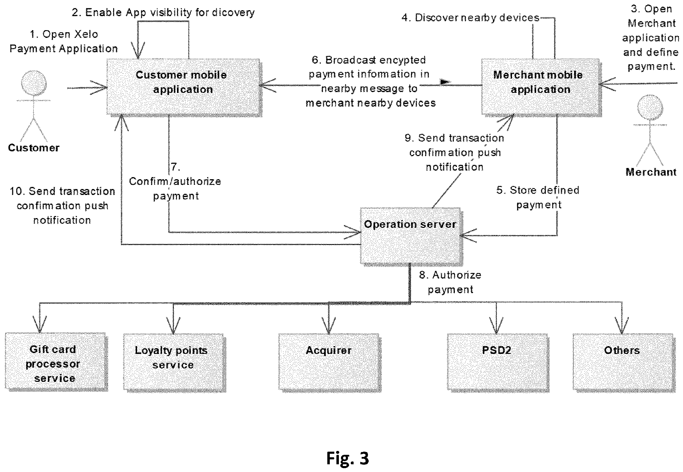

### 3^{rd} transaction flow (Fig. 3)

Information exchange and nearby discovery is done without an external nearby provider. This flow is a variation of the first and second transaction flows described above. In these 3^{rd} transaction flow there is not any external "nearby service" used to determine nearby devices or to pass the first payload information to nearby receivers - this is done directly between mobile devices of the first and the second party.. This flow comprises same steps 1-3 and 7-10 as the 1^{st} transaction flow, but comprises different steps from 4 to 6, which are as follows:
(4) The merchant defines a transaction on his mobile device. The unique transaction identifier UTID is created.
(5) The transaction is preferably registered in the operation server and/or is stored locally. Transaction payload is transmitted directly to customers who have their mobile application started and who are located near the merchant.
(6) The customers receive encrypted transaction payloads from merchants who are located near to them.

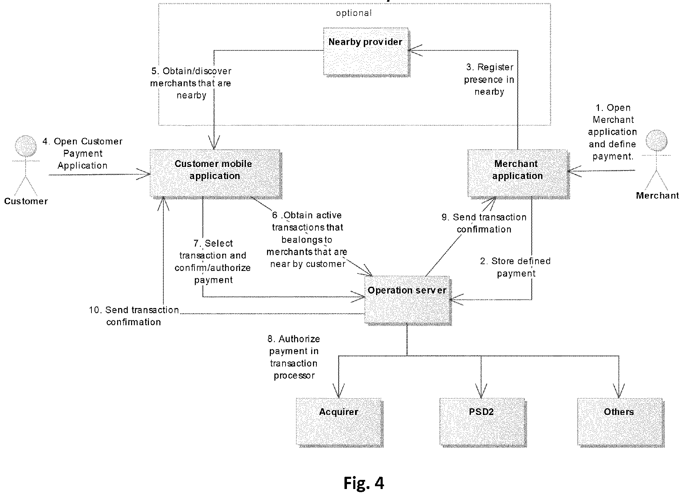

### 4^{th} transaction flow (Fig. 4)

The 4^{th} transaction flow includes nearby merchant presence determination. In the scenario presented in Fig. 4 the first party (represented by a merchant) creates transaction definitions and registers them on the operation server. The first party also broadcasts his presence by registering by the nearby provider (service) - to become discoverable for other parties or broadcasts directly using the first party physical device, e.g. with use of device proximity technologies, without the use of the nearby provider. Nearby presence of the first party is discoverable by second parties (directly with the use of proximity technologies or with the use of the nearby provider). The second party can select a discovered first party (e.g. merchant name) and obtain from the operation server a list of active transactions created by this first party. The rest of the process- steps from 7 to 10 - are the same as in the 1^{st}, 2^{nd} or 3^{rd} transaction flows. The nearby provider component is optional, as nearby proximity detection can be done by the merchant and the customer application alone.

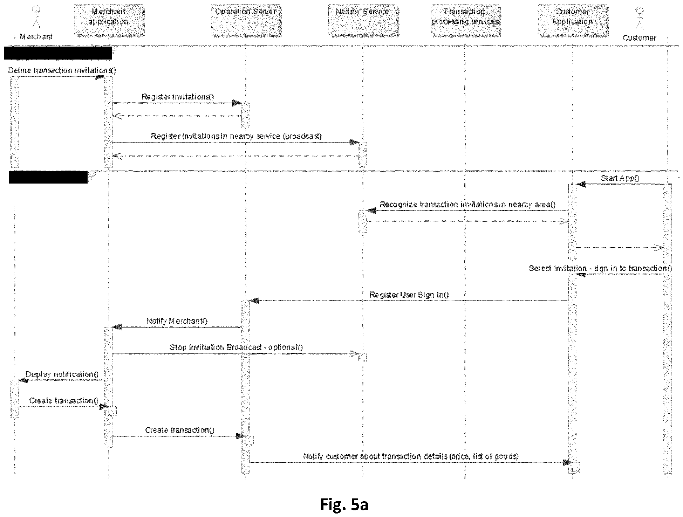

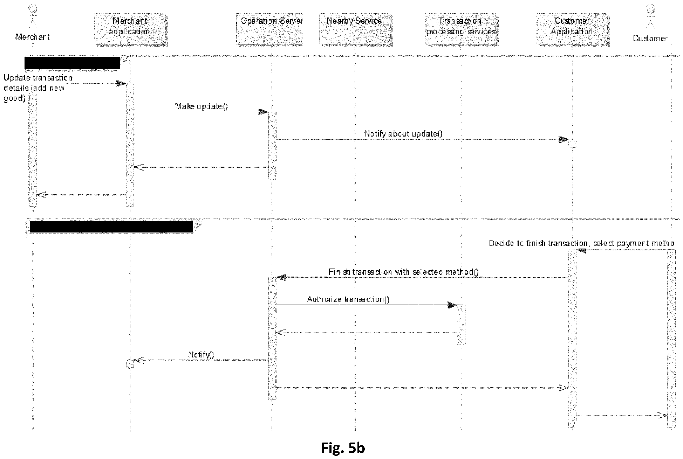

### 5^{th} transaction flow (Fig. 5a, b)

Fig. 5 presents an extended transaction flow. This flow is an extended variation of simple transaction flows described above. In this case the merchant device broadcasts requests for potential transactions - invitations. Such request contains only basic information like merchant name, place identifier (table id, cash register number etc.)

Details of transaction (price, list of goods) will be communicated after a potential user (in the role of a Customer) signs in to such invitation. This embodiment can be implemented for example in a restaurant where invitations contain table numbers. When a customer comes, he picks a table number by signing in to an invitation for that table. From this moment on the merchant can pass transaction details directly to the customer device. The merchant can also update transaction details online (for example when the Customer wants to order something more). Fig. 5 and ab illustrates the following steps:
1. Before any second party e.g. a customer comes to the point of sale, a first party, e.g. a merchant, configures one or more transaction invitations which describe(s) specific place(s) where the customer makes a transaction (for example table numbers in a restaurant, cash register numbers in a hypermarket).
2. Such invitations (first payload information) are broadcasted using nearby proximity technologies.
3. When the customer comes to the point of sale, he needs to sign in into one of the invitations that are broadcasted - for example the one identified as "table 3" (Fig. 5). From this point on there is a one to one connection between the merchant and Customer established. Any further information is transmitted through this connection.
4. The merchant is notified that The customer has joined. He can now stop broadcasting invitation that has been selected by the customer.
5. The merchant defines a bill related to the invitation selected by the customer - e.g. the bill for table 3 (Fig. 5).
6. The customer who has signed in to the invitation for table 3 receives notification about bill details.
7. The merchant can change the customer's order (for example when the Customer wants to add a new item). A specific customer who has signed in to a specific invitation will be notified about such change.
8. When the Customer decides to finalize the transaction he selects a payment method in his mobile application and approves the transaction (second payload information).
9. The transaction is processed by the operation server and both parties (the merchant and the customer) are notified about the results. The notification is optional.

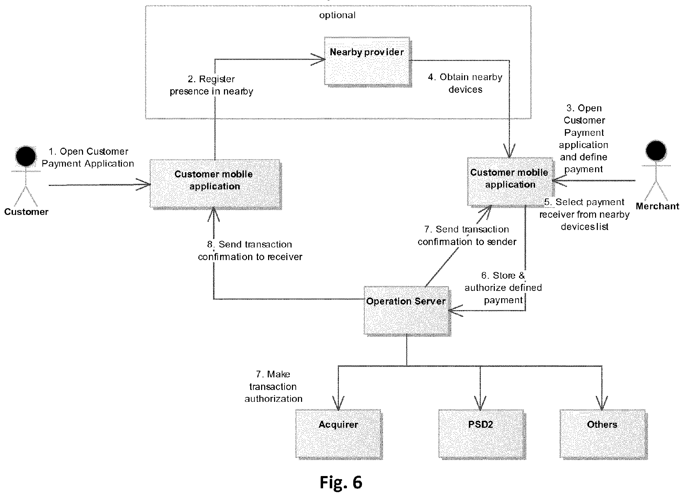

### 6^{th} transaction flow (Fig. 6)

The 6^{th} transaction flow, also described as P2P transaction flow, describes a scenario where the parties (for example two Customers) want to pass goods between them (money, loyalty points, other electronic goods). In this scenario the first party is represented by side that wants to receive goods. The first party registers its presence by the nearby provider (service) or broadcasts it with the use of first party device proximity technologies, to become discoverable for other parties (the first payload information). The second party who wants to send goods, can select a specific first party (receiver) from a list the of first parties found. The second party defines a transaction (for example an amount of money to be passed) and confirms his willingness to proceed (the second payload information). The operation server finalizes transaction (goods are passed to the second party) and notifies both parties about results of the transaction. The notification is optional.

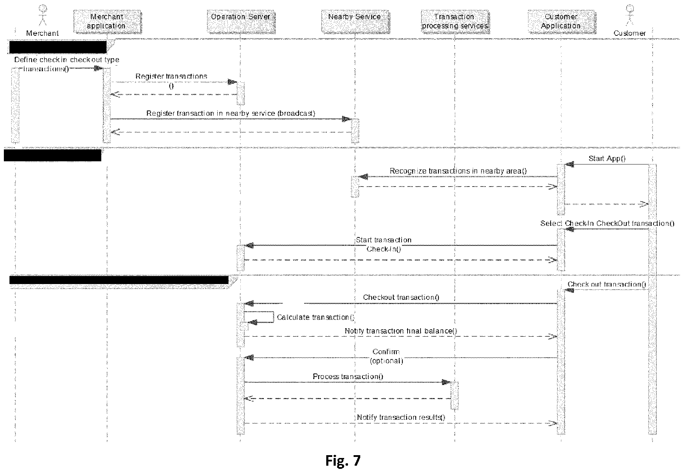

### 7^{th} transaction flow (Fig. 7)

The 7^{th} transaction flow, also described as Check In - Check Out, is shown in Fig. 7. In this case the first party sends the first payload information, which contains a request for a transaction. The request may contain information about cost (money value or other measure) per time unit. The second parties' devices nearby receive such request and present them to the second parties e.g. on a second party device screen. The second party (e.g. a Customer) who wants to proceed with a transaction needs to check-in to that transaction. After the check-in action, the transaction starts. When the second party wants to finalize the transaction, the second party needs to make a checkout action (second payload information). Check - In and check - out actions are communicated to the operation server. The final transaction cost is determined by the time that elapsed from the check-in action to the check-out. This embodiment can be implemented in places where time (duration) determines transaction cost, for example: in public transport, in swimming pools etc.
1. Before any second party, e.g. a customer comes to a point of sale, a first party, e.g. a merchant configures possible transactions of the type "check-in check-out" (for example a ticket for a public transport).
2. Such transactions (first payload information) are registered in the operation server and broadcasted by nearby proximity technologies.
3. When the Customer comes to the nearby range area, he can pick up a transaction in his mobile application and select a check-in action. The operation server starts billing for that transaction.
4. When the Customer decides to finish using the service (for example leave the bus) he selects the check-out in his mobile application (second payload information). At this point the operation server calculates the final balance of the transaction and notifies the customer.
5. Depending of the configuration the customer may be required to confirm the thus calculated bill or otherwise the bill is processed automatically (approval by default) by the operation server without confirmation from the customer.

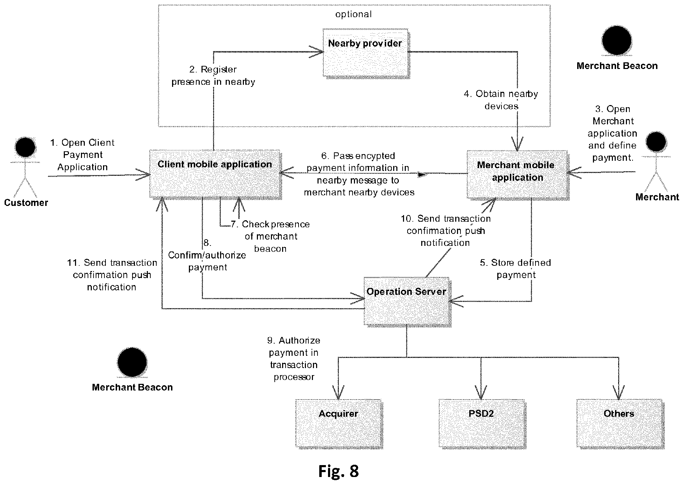

### 8^{th} transaction flow (Fig. 8)

Fig. 8 illustrates the use of external localization hardware. In all cases described above external hardware can be used, which can improve proximity discovery (for example by limiting it to a specific range in physical space). Below an implementation with "Merchant Beacons" is presented. The message (first payload information) is passed from the first party through a nearby channel and can be additionally filtered by the receiver (the second party) whenever the receiver is in the range of a specific beacon device. In this scenario the receiver (the customer) receives the first payload information. This information contains identifier (id) of a beacon. The receiver will then try to find (e.g. with Bluetooth Low Energy, BLE) the beacon, whose identifier (id) was contained in the received message. If such a beacon is found, the transaction will be presented to the customer, if not - the transaction will skipped.

### 9^{th} transaction flow

Split Payment - finalize transaction. This is a variant of how a transaction can be finalized. It applies to all aforementioned embodiments. Instead of finalizing the transaction by one second party (e.g. one Customer) - the customer can decide that he wants to split the payment between multiple users (share costs). In that case one or more other second parties who want to participate in the transaction must broadcast their presence. After that the Customer can select appropriate other second parties who would receive a notification form the operation server, comprising details about payment (partial transaction) they need to fulfill. When all selected second parties finalize their partial transactions-the operation server will notify the Customer(s) and the merchant that whole transaction is completed.

## Claims

1. A method for executing a transaction between a first party and a second party in a system comprising:
- an operation server, operatively connected with or including a transaction processor;
- a first party device, operatively connected with the operation server;
- a second party device, operatively connected with the operation server;
- said method comprising the following steps:
A. Providing a unique transaction identifier (UTID) associated with the transaction;
B. Transmitting a first payload information from the first party device to the second party device, said first payload information comprising data relating to the transition associated with the unique transaction identifier (UTID).
C. Notifying the operation server about the transaction;
D. Generating a second payload information by the second party device and sending the second payload information from the second party device to the operation server, said second payload information comprising data relating to the transaction associated with the unique transaction identifier (UTID);
E. Authorizing the transaction in the transaction processor by the operation server based on the second payload information and receiving a result of the authorization by the operation server.

2. The method according to claim 1, **characterized in that** the first payload information comprises at least the unique transaction identifier (UTID) and optionally further comprises additional information such as: amount and currency of the transaction, table identifier, cashbox identifier, outlet identifier, receipt identifier, information about the first party, in particular the first party identifier, name, logo, terminal identifier, picture of good related to transaction, transaction description, geolocation data, sound.

3. The method according to claim 1 or 2, **characterized in that** the second payload information comprises at least the second party identifier and optionally further comprises additional information such as: the unique transaction identifier (UTID), consent of the second party to the transaction, amount and currency of the transaction, table identifier, cashbox identifier, receipt identifier, information about the second party, in particular the second party name, credit card identifier, logo, terminal identifier.

4. The method according to claim 1, 2 or 3, **characterized in that** in the step a) the unique transaction identifier (UTID) is generated by the first party device.

5. The method according to claim 1, 2 or 3, **characterized in that** in the step a) the unique transaction identifier (UTID) is generated by the operation server on request from the first party device and is subsequently transmitted from the operation server to the first party device.

6. The method according to any of the preceding claims from 1 to 5, **characterized in that** the first payload information in the step b) is transmitted directly from the first party device to the second party device, preferably using a wireless radio communication protocol such as: Bluetooth, Wi-Fi, BLE (Bluetooth Low Energy), ultrasound.

7. The method according to any of the preceding claims from 1 to 5, **characterized in that** the first payload information in the step b) is transmitted between the first party device and the second party device through another communication node, in particular through the operation server.

8. The method according to any of the preceding claims from 1 to 7, **characterized in that** in order to establish a connection between the first party device and the second party device prior to the step b) any of the following steps are performed:
- the first payload information is broadcasted by the first party device and is received by the second party device located in the vicinity of the first party device;
- the information about the presence of the first party device is broadcasted by the first party device and is received by the second party device located in the vicinity of the first party device, which second party device - in turns - sends to the first party device a request for the first payload information;
- the information about the presence of the second party device is broadcasted by the second party device and is received by the operation server or by the first party device located in the vicinity of the second party device;
- and a connection between the first party device and the second party device is established.

9. The method according to any of the preceding claims from 1 to 8, **characterized in that** the step b) is carried out between the first party device and the second party device selected using additional criteria such as: first party type, second party type, physical location of the first party device or of the second party device.

10. The method according to any of the preceding claims from 1 to 9, **characterized in that** the notification in the step c) is executed by the first party device.

11. The method according to any of the preceding claims from 1 to 10, **characterized in that** after the step e) it comprises additional step:
f) sending information about the result of the authorization for the transaction associated unique transaction identifier (UTID) by the operation server to the first party device and/or to the second party device.

12. The method according to any of the preceding claims from 1 to 11, **characterized in that** the operation server and the transaction processor are implemented on the same device or the operation server includer the transaction processor.

13. The method according to any of the preceding claims from 1 to 12, **characterized in that** the first party device and/or the second party device is a wireless telecommunication device, preferably a smartphone.

14. The method according to any of the preceding claims from 1 to 13, **characterized in that** said transaction is a financial transaction, said first party and said second party are parties to the financial transaction, wherein the first party is a merchant, the second party is a customer, the first party device is the merchant device, the second party device is the customer device.

15. The method according to any of the preceding claims from 1 to 14, **characterized in that** the transaction processor includes a payment scheme, for example a bank card system, a bank transfer system, BLIK, Paypal, PSD2 (Payment Services Directive 2), a blockchain-based system, DLT (Distributed Ledger Technology).

16. A system comprising:
- an operation server, operatively connected with or including a transaction processor.
- a first party device, operatively connected with the operation server.
- a second party device, operatively connected with the operation server.
said system configured and programmed for carrying out the method according to any of claims from 1 to 15.

17. The system according to claim 16, **characterized in that** the first party device and/or the second party device is a wireless telecommunication device, preferably a smartphone.

18. The system according to claim 16 or 17, **characterized in that** it comprises two or more first party devices and/or two or more second party devices.
